# FASCICULE DE BREVET EUROPEEN

(11) **EP 2 514 980 B1**
(45) Date de publication et mention de la délivrance du brevet: **04.05.2016**
(21) Numéro de dépôt: 12354024.7
(22) Date de dépôt: 28.03.2012
(51) Int. Cl.: F16B 37/12, F16B 37/04

(54) **Insert pour support thermoplastique et procédé d'assemblage de l'insert avec le support**
Einsatz für thermoplastische Halterung, und Zusammenbauverfahren des Einsatzes mit der Halterung
Insert for thermoplastic support and method for assembling the insert with the support

(30) Priorité: 18.04.2011 FR 1101208
(43) Date de publication de la demande: 24.10.2012
(73) Titulaire: Bollhoff Otalu S.A., 73490 La Ravoire (FR)
(72) Inventeur: Lejars, Patrick, 73610 St. Alban de Montbel (FR); Rousseaux, Philippe, 73190 St. Baldoph (FR); Perroud, Norbert, 73190 Curienne (FR)
(74) Mandataire: Hecké, Gérard

(56) Documents cités:
- EP-A1- 0 872 650
- DE-A1- 4 419 422
- DE-A1- 19 856 611
- US-A- 4 046 181

## Description

### Domaine technique de l'invention

L'invention est relative à un insert à assembler dans un support thermoplastique en étant chauffé à une température apte à faire fondre ce support thermoplastique. Cet insert est d'un type selon lequel il comporte un fût, une tête disposée à une extrémité du fût et un élément en saillie de la surface extérieure du fût. L'élément en saillie est disposé entre la tête et l'extrémité du fût opposée à ladite tête. Il comporte une encoche délimitant deux dents ayant des extrémités orientées en direction de l'extrémité du fût opposée à la tête.

### État de la technique

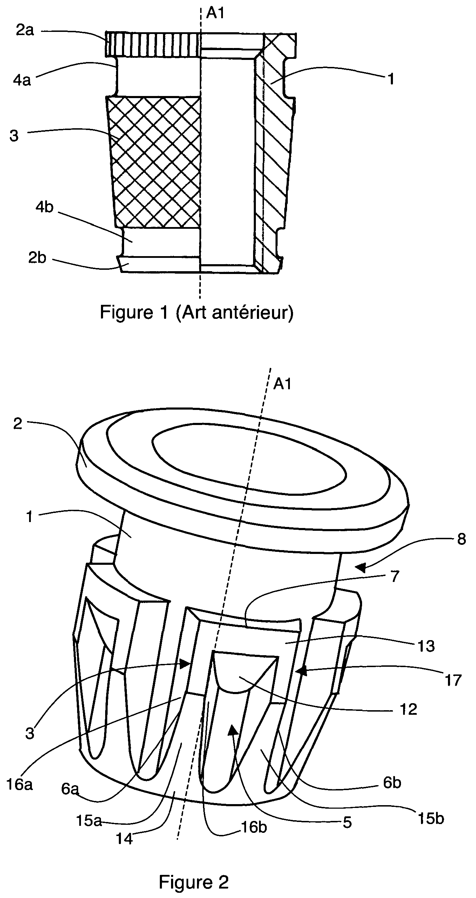

Dans le domaine des inserts pour support thermoplastique, il existe, comme illustré à la figure 1, des inserts ayant un corps formé par un fût 1 se terminant par deux têtes 2a, 2b. Un élément 3 est en saillie du fût 1, cet élément 3 est façonné pour présenter des motifs aptes à éviter la rotation de l'insert sur lui-même une fois enfoncé dans le support. L'insert comporte en outre, de part et d'autre de l'élément 3 en saillie, des gorges 4a, 4b respectivement délimitées par l'élément 3 en saillie, les têtes 2a, 2b et des portions de fût 1. Ces gorges 4a, 4b permettent d'éviter l'arrachement de l'insert selon une traction parallèle à son axe longitudinal A1 une fois ce dernier noyé jusqu'à affleurement dans le support thermoplastique.

En fait, un tel insert est destiné à être reporté sur un support thermoplastique au niveau de sa tête 2b. Une fois en contact avec le support thermoplastique, l'insert est chauffé de sorte à faire fondre le matériau thermoplastique. Une pression permet alors d'enfoncer l'insert dans le matériau thermoplastique jusqu'à affleurement de sorte que les deux gorges 4a, 4b soient comblées de matériau thermoplastique. Après arrêt du chauffage et refroidissement de l'ensemble, la matière thermoplastique en fusion s'est solidifiée. La matière thermoplastique ayant fluée dans les motifs de l'élément 3 en saillie et les gorges 4a, 4b permet de maintenir l'insert en position dans le support.

Un tel insert génère certaines contraintes lors de son insertion dans un support thermoplastique, de plus les motifs réalisés peuvent, en fonction des sollicitations de l'insert, ne pas être suffisants pour empêcher la rotation de l'insert sur lui-même ou son arrachement du support.

Un insert du type précité est décrit dans le brevet US-4,046,181 des Etats-Unis d'Amérique. Sa face latérale porte plusieurs successions annulaires de projections latérales, que des encoches séparent les unes des autres et dont les extrémités arrière sont pointues.

Le document DE 44 19 422 A1 décrit un insert ayant les caractéristiques selon la première partie de la revendication 1.

### Objet de l'invention

L'objet de l'invention consiste à réaliser un insert dont les performances techniques en tenue à l'arrachement dans un support thermoplastique sont améliorées.

Cet objet est atteint grâce à un insert conformément à la revendication 1.

Selon un mode de réalisation, l'entretoise comporte entre les deux dents une face inclinée vers le fût en direction de l'extrémité du fût opposée à la tête. Selon un perfectionnement, les extrémités libres des dents sont munies chacune d'un pan incliné vers le fût en direction de l'extrémité du fût opposée à la tête.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente un insert pour support thermoplastique selon l'art antérieur vu en semi-coupe axiale,
- la figure 2 représente une vue en trois dimensions d'un insert selon un exemple particulier de mise en oeuvre de l'invention,
- la figure 3 représente une vue de l'insert de la figure 2 orientée selon l'extrémité de l'insert opposée à la tête,
- la figure 4 illustre une vue de l'insert de la figure 3 selon la coupe A-A,
- la figure 5 illustre une vue partielle et agrandie de la figure 3,
- la figure 6 illustre, vue en coupe, une étape d'assemblage d'un insert avec un support thermoplastique,
- la figure 7 illustre, vue en coupe, l'insert assemblé au support suite à l'étape de la figure 6.

### Description de modes préférentiels de réalisation

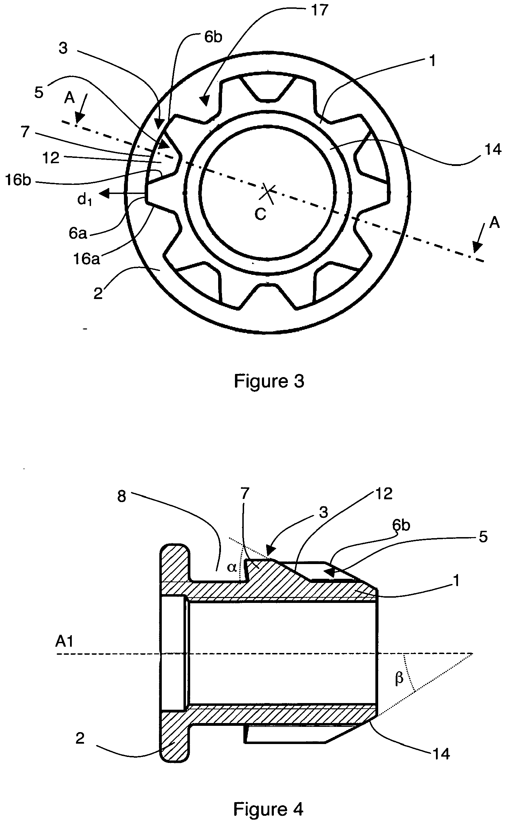

Sur les figures 2 à 5, l'insert pour support thermoplastique comporte un fût 1. Le fût 1 est, de préférence, cylindrique et orienté selon un axe longitudinal A1. Sur la figure 3, l'axe A1 passe par le point C, et est perpendiculaire au plan de la figure. Par orienté selon l'axe longitudinal A1, on entend que la courbe génératrice du cylindre est, de préférence, parallèle à l'axe longitudinal A1.

Une tête 2 est disposée à une extrémité du fût 1. Par extrémité, on entend une extrémité longitudinale du fût. Cette tête 2 peut être unique, et peut être formée dans un plan perpendiculaire à l'axe A1 du fût 1. La tête 2 s'étend alors radialement par rapport à la surface extérieure du fût 1, et peut revêtir différentes formes. Autrement dit, la tête 2 forme un épaulement avec le fût 1, elle comporte donc des dimensions extérieures supérieures aux dimensions extérieures du fût 1 entre la base de l'entretoise 7 et la tête 2. De manière générale, l'insert comporte en outre un élément 3 en saillie de la surface extérieure du fût 1. Cet élément 3 est disposé entre la tête 2 et l'extrémité du fût 1 opposée à la tête 2. L'élément en saillie 3 comporte une encoche 5 délimitant deux dents 6a, 6b et une entretoise 7 reliant les dents 6a, 6b entre elles. Les extrémités libres des dents 6a, 6b sont orientées en direction de l'extrémité du fût 1 opposée à la tête 2. L'entretoise 7 est proximale 2 de la tête 2 avec interposition d'un espace libre 8 entre l'entretoise 7 et la tête 2. Cet espace libre 8 peut aussi être défini par une interposition d'une séparation formée par une portion de surface extérieure du fût 1.

L'espace libre 8 est destiné à recevoir de la matière thermoplastique pour empêcher l'arrachement de l'insert par traction selon l'axe A1. L'encoche 5 est destinée à recevoir de la matière thermoplastique pour empêcher la rotation de l'insert autour de l'axe A1.

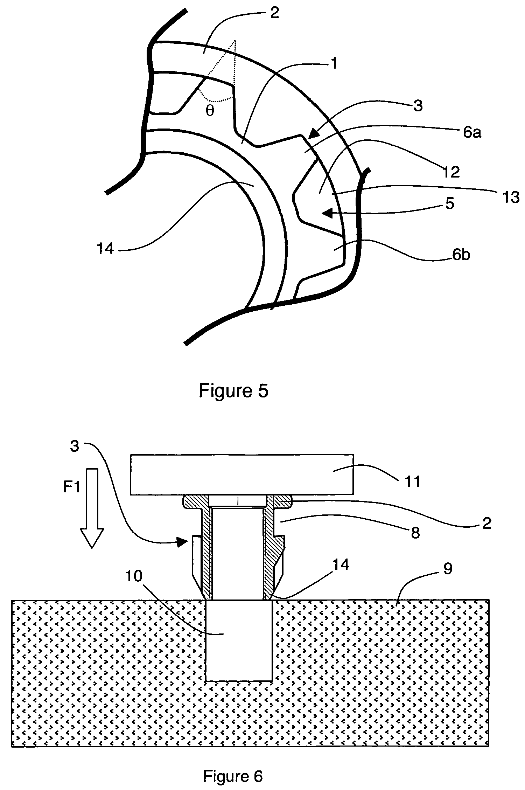

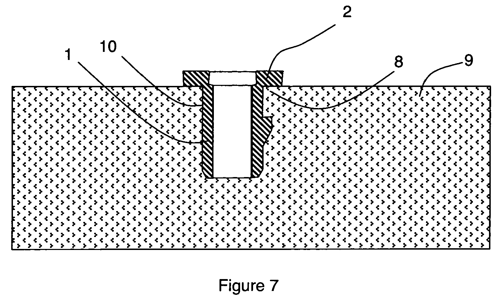

Sur les figures 6 et 7, le procédé d'assemblage d'un insert, tel que décrit, dans un support 9 thermoplastique comporte une étape dans laquelle l'extrémité de l'insert opposée à la tête 2 de l'insert est placée en contact avec le support thermoplastique 9 (figure 6), de préférence au niveau d'un trou 10 ou d'une amorce de trou dont les dimensions sont inférieures aux dimensions extérieures de l'insert. Ensuite, l'insert est chauffé à une température apte à faire fondre la matière thermoplastique formant le support 9. Les calories nécessaires à la chauffe de l'insert peuvent être apportées par tous système de chauffage 11 apte à transmettre ses calories à l'insert. À titre d'exemple, le système de chauffage 11 peut être une cartouche électrique chauffante en contact thermique avec l'insert, ou un système apte à exciter les électrons de surface de l'insert par induction (dans ce cas, l'insert a des propriétés ferromagnétiques). Une pression est appliquée sur l'insert en direction du support thermoplastique 9 (flèche F1) de sorte à enfoncer l'insert dans le support 9. Cette pression peut être appliquée après avoir chauffé l'insert ou concomitamment à la chauffe de l'insert. Dès lors, la matière thermoplastique en fusion flue jusqu'à recouvrir l'élément 3 en saillie, et de préférence combler l'espace libre 8. Pour finir, le support 9 thermoplastique et l'insert sont refroidis pour obtenir une liaison totale entre le support et l'insert. Le refroidissement peut être réalisé par l'annulation de l'apport des calories tout en plaçant l'ensemble à température ambiante. Par liaison totale, on entend que le support 9 et l'insert se comportent comme une pièce monobloc, un mouvement relatif de l'un par rapport à l'autre n'étant pas permis. De préférence, la tête 2 de l'insert vient en contact avec le support 9 et forme une butée indiquant que la pression selon F1 doit être interrompue.

De préférence, la tête 2 a des dimensions transversales supérieures aux dimensions transversales du fût et de l'élément 3 en saillie réunis.

Selon une mise en oeuvre particulière, l'entretoise 7 comporte entre les deux dents 6a, 6b, une face inclinée 12 vers le fût 1 en direction de l'extrémité du fût opposée à la tête 2. Lors de l'assemblage de l'insert avec son support 9, l'insert est présenté par son extrémité opposée à la tête 2, la face inclinée 12 permet de limiter les contraintes d'insertion, et de favoriser le déplacement de ladite matière fusion pour combler au mieux l'espace libre 8 situé entre l'entretoise 7 et la tête 2. De préférence, l'angle α formé par la face inclinée 12 par rapport à la surface extérieure du fût entre l'entretoise 7 et la tête 2 est compris entre 25 degrés et 35 degrés.

De préférence, la face inclinée 12 relie progressivement une face supérieure 13 de l'élément 3 en saillie à une portion de la surface extérieure du fût disposée entre les deux dents 6a, 6b, autrement dit l'encoche 5 comporte un fond délimité par la portion de fût. La face supérieure 13 est définie comme étant la face de l'élément 3 en saillie opposée et distale d'une base de l'élément 3 en saillie, ladite base étant à l'interface avec le fût 1.

Selon un perfectionnement, l'extrémité du fût 1 opposée à la tête 2 comporte un chanfrein 14, appelé aussi cône d'entrée de forme tronconique, réduisant localement les dimensions extérieures dudit fût 1. Le chanfrein 14 permet de faciliter l'insertion de l'insert dans le trou 10 lors du procédé d'assemblage (figure 6). Le chanfrein 14 permet avantageusement de faciliter le refoulement de la matière thermoplastique en fusion le long de la surface extérieure de l'insert. Dès lors, les dimensions extérieures de l'insert au niveau de son extrémité libre à laquelle est formé le chanfrein 14 sont inférieures aux dimensions du trou 10 du support 9. De préférence, le chanfrein forme un angle β compris entre 25 degrés et 35 degrés par rapport à l'axe A1 du fût.

Selon une mise en oeuvre, les extrémités libres des dents 6a, 6b sont munies chacune d'un pan 15a, 15b incliné vers le fût 1 en direction de l'extrémité du fût 1 opposée à la tête. Ces pans inclinés 15a, 15b peuvent relier progressivement la face supérieure 13 de l'élément 3 au fût 1. De préférence, les pans 15a, 15b inclinés des deux dents 6a, 6b sont formés dans la prolongation du chanfrein 14. Ceci permet notamment de faciliter les mouvements de la matière thermoplastique en fusion lors de l'assemblage de l'insert avec le support 9 thermoplastique.

De manière générale, on dira que l'insert a, à son extrémité opposée à la tête 2, un profil lui permettant de refouler la matière thermoplastique en fusion en direction de sa tête 2. De la même manière, les pans inclinés 15a et 15b, et la face inclinée 12 d'un élément 3 en saillie permettent de faciliter la remontée du thermoplastique en fusion au-dessus de l'élément 3 en saillie pour aller combler au mieux l'espace libre 8.

Chaque dent 6a, 6b peut comporter deux parois latérales 16a, 16b longitudinales convergentes l'une en direction de l'autre dans une direction opposée au fût 1 (direction d₁ illustrée à la figure 3, la direction d₁ étant perpendiculaire à l'axe longitudinal A1 du fût 1). Dans l'exemple particulier, les parois latérales sont allongées dans la longueur du fût, et sont délimitées respectivement par l'encoche 5 et par l'espace libre disposé autour de l'élément 3. Les deux parois latérales inclinées peuvent former un angle θ de 40 degrés l'une par rapport à l'autre (figure 5).

De préférence, les parois latérales longitudinales 16a, 16b rejoignent chacune une portion de la surface extérieure du fût, la surface supérieure 13, et le cas échéant un pan incliné 15a, 15b associé. La paroi latérale 16b délimitée par l'encoche 5 rejoint en outre, le cas échéant, la face inclinée 12.

Bien qu'il n'ait été décrit de manière générale qu'un élément 3 en saillie, l'insert peut comporter une pluralité d'éléments 3 en saillie (figure 2 et 3). Les éléments 3 en saillie sont alors échelonnés angulairement sur la surface extérieure du fût 1, deux éléments en saillie adjacents étant séparés par une rainure 17, de préférence délimitée par deux parois latérales longitudinales de deux dents adjacentes de deux éléments en saillie adjacents, et une portion de la surface extérieure du fût 1 entre les deux éléments en saillie adjacents. De préférence, les éléments 3 en saillie sont solidaires entre eux uniquement par le fût 1. Autrement dit, ils sont espacés l'un de l'autre par interposition d'une séparation formée par une portion de fût 1.

Les éléments 3 en saillie permettent grâce à leurs espaces libres 8 respectifs de former après refroidissement de la matière thermoplastique en fusion un anneau de retenu contre l'arrachement de l'insert. En fait, les éléments 3 en saillie délimitent une gorge entre leurs entretoises 7 et la tête 2. Les rainures 17 définies ci-dessus débouchent transversalement dans la gorge.

L'insert peut être réalisé par forgeage à chaud ou à froid. Ces techniques de forgeage évitent la génération de copeaux ou les chutes de matières, elles sont donc plus avantageuses économiquement que les techniques de décolletage ou les techniques nécessitant une reprise d'usinage. L'insert peut aussi être réalisé par moulage (fonderie) avec les mêmes avantages économiques.

De préférence, l'insert comporte un trou pratiqué selon son axe longitudinal. Le trou peut être borgne et comporter une ouverture au niveau de la tête de l'insert. Le trou peut aussi être débouchant et comporter deux ouvertures formées aux extrémités distales de l'insert selon l'axe A1, c'est-à-dire au niveau de la tête de l'insert et à l'extrémité du fût opposée à la tête. L'intérieur du trou peut être taraudé de sorte à recevoir un organe par vissage.

De préférence, les parois latérales ont une forme galbée de surface concave dont le fond est, de préférence, orienté selon l'axe longitudinal du fût. La paroi supérieure et les pans inclinés sont, de préférence galbés de surface convexe dont le sommet est, de préférence, orienté selon l'axe longitudinal du fût. Ces formes arrondies (concaves, convexes) permettent notamment de limiter les concentrations de contraintes dans le matériau thermoplastique une fois celui-ci refroidi, tout en facilitant le refoulement de la matière en fusion du support lors de l'assemblage. En plus des avantages procurés lors de l'assemblage, ces formes arrondies permettent de répartir l'effort subi par le matériau thermoplastique lors de l'application du couple de vissage d'un organe de vissage reporté dans l'insert.

Concernant les faces inclinées et le pan incliné, un profil de type galbé concave ou convexe est possible, cependant la forme convexe sera préférée pour ses fonctions favorisant le refoulement de la matière thermoplastique lors de l'assemblage de l'insert avec un support correspondant.

## Revendications

1. Insert à assembler dans un support thermoplastique en étant chauffé à une température apte à faire fondre ce support thermoplastique, comportant un fût (1), une tête (2) disposée à une extrémité du fût (1), un élément (3) en saillie de la surface extérieure du fût (1), ledit élément (3) en saillie étant disposé entre la tête (2) et l'extrémité du fût (1) opposée à ladite tête (2), ledit élément (3) en saillie comportant une encoche (5) délimitant deux dents (6a, 6b) ayant des extrémités orientées en direction de l'extrémité du fût (1) opposée à la tête (2),
insert **caractérisé en ce que** l'élément (3) en saillie comporte une entretoise (7) reliant lesdites dents (6a, 6b) entre elles, les extrémités orientées en direction de l'extrémité du fût (1) opposée à la tête (2) étant libres de l'entretoise, et l'entretoise (7) étant proximale de la tête (2) avec interposition d'un espace libre (8) entre l'entretoise (7) et la tête (2).

2. Insert selon la revendication 1, **caractérisé en ce que** l'entretoise (7) comporte, entre les deux dents (6a, 6b), une face inclinée (12) vers le fût (1) en direction de l'extrémité du fût opposée à la tête (2).

3. Insert selon la revendication 2, **caractérisé en ce que** l'angle, formé par la face inclinée (12) par rapport à la surface extérieure du fût (1) entre l'entretoise (7) et la tête (2), est compris entre 25 degrés et 35 degrés.

4. Insert selon l'une quelconque des revendications précédentes, **caractérisé en ce que** l'extrémité du fût (1) opposée à la tête (2) comporte un chanfrein (14) réduisant localement les dimensions extérieures dudit fût (1).

5. Insert selon l'une quelconque des revendications précédentes, **caractérisé en ce que** les extrémités libres des dents (6a, 6b) sont munies chacune d'un pan incliné (15a, 15b) vers le fût (1) en direction de l'extrémité du fût (1) opposée à la tête (2).

6. Insert selon les revendications 4 et 5, **caractérisé en ce que** les pans inclinés (15a, 15b) des deux dents (7a, 7b) sont formés dans la prolongation du chanfrein (14).

7. Insert selon l'une des revendications 4 ou 6 **caractérisé en ce que** le chanfrein (14) forme un angle compris entre 25 degrés et 35 degrés par rapport à l'axe du fût (1).

8. Insert selon l'une quelconque des revendications précédentes, **caractérisé en ce que** chaque dent (6a, 6b) comporte deux parois latérales longitudinales (16a, 16b) convergentes l'une vers l'autre dans une direction opposée au fût (1).

9. Insert selon l'une quelconque des revendications précédentes, **caractérisé en ce qu'**il comporte une pluralité d'éléments (3) en saillie, lesdits éléments (3) en saillie étant échelonnés angulairement sur la surface extérieure du fût (1), deux éléments (3) en saillie adjacents étant séparés par une rainure (17).

## Patentansprüche

1. Einsatz zum Einsetzen in einen thermoplastischen Träger durch Erhitzen auf eine Temperatur, die geeignet ist, diesen thermoplastischen Träger zum Schmelzen zu bringen, umfassend einen Schaft (1), einen oberen Teil (2), der an einem Ende des Schafts (1) angeordnet ist, ein Element (3), das erhaben aus der Außenfläche des Schafts (1) hervorsteht, welches erhabene Element (3) zwischen dem oberen Ende (2) und dem Ende des Schafts (1) angeordnet ist, das sich entgegengesetzt zum genannten oberen Ende (2) befindet, welches erhabene Element (3) einen Einschnitt (5) aufweist, der zwei Zacken begrenzt (6a, 6b), deren Enden in Richtung auf das zum oberen Ende (2) entgegengesetzte Ende des Schafts (1) ausgerichtet sind,
Einsatz, der **dadurch gekennzeichnet ist, dass** das erhabene Element (3) ein Verbindungsstück (7) aufweist, das die genannten Zacken (6a, 6b) miteinander verbindet, wobei die in Richtung auf das dem oberen Ende (2) entgegengesetzte Ende des Schafts (1) ausgerichteten Enden bezüglich dem Verbindungsstück frei sind und das Verbindungsstück (7) nahe dem oberen Ende (2) angeordnet ist, wobei ein freier Zwischenraum (8) zwischen dem Verbindungsstück (7) und dem oberen Ende (2) gelassen ist.

2. Einsatz nach Anspruch 1, **dadurch gekennzeichnet, dass** das Verbindungsstück (7) zwischen den beiden Zacken (6a, 6b) eine zum Schaft (1) in Richtung auf das zum oberen Ende (2) entgegengesetzte Ende des Schafts (12) geneigte Fläche (12) aufweist.

3. Einsatz nach Anspruch 2, **dadurch gekennzeichnet, dass** der von der geneigten Fläche (12) bezüglich der Außenfläche des Schafts (1) zwischen dem Verbindungsstück (7) und dem oberen Ende (2) gebildete Winkel 25 bis 35 Grad beträgt.

4. Einsatz nach einem der vorstehenden Ansprüche, **dadurch gekennzeichnet, dass** das zum oberen Teil (2) entgegengesetzte Ende des Schafts (1) eine Abschrägung (14) aufweist, die die Außenabmessungen des genannten Schafts (1) lokal vermindert.

5. Einsatz nach einem der vorstehenden Ansprüche, **dadurch gekennzeichnet, dass** die freien Enden der Zacken (6a, 6b) jeweils mit einer zum Schaft (1) in Richtung auf das dem oberen Ende (2) entgegengesetzte Ende des Schafts (1) hin geneigten Seitenfläche (15a, 15b) versehen sind.

6. Einsatz nach Anspruch 4 und 5, **dadurch gekennzeichnet, dass** die geneigten Seitenflächen (15a, 15b) der beiden Zacken (7a, 7b) in Verlängerung der Abschrägung (14) gebildet sind.

7. Einsatz nach einem der Ansprüche 4 oder 6, **dadurch gekennzeichnet, dass** die Abschrägung (14) einen Winkel von 25 bis 35 Grad bezüglich der Achse des Schafts (1) bildet.

8. Einsatz nach einem der vorstehenden Ansprüche, **dadurch gekennzeichnet, dass** jeder Zacken (6a, 6b) zwei Seitenlängswände (16a, 16b) aufweist, die in einer zum Schaft (1) entgegengesetzten Richtung aufeinander zulaufen.

9. Einsatz nach einem der vorstehenden Ansprüche, **dadurch gekennzeichnet, dass** er eine Mehrzahl erhabener Elemente (3) umfasst, welche erhabenen Elemente (3) an der Außenfläche des Schafts (1) winklig zueinander versetzt angeordnet sind, wobei zwei aneinander angrenzende erhabene Elemente (3) durch eine Einkerbung (17) voneinander getrennt sind.

## Claims

1. Insert to be assembled into a thermoplastic support while being heated at a temperature able to fuse this thermoplastic support, comprising a barrel (1), a head (2) arranged at an end of the barrel (1), a portion (3) projecting from the external surface of the barrel (1), said projecting portion (3) being arranged between the head (2) and the end of the barrel (1) opposite said head (2), said projecting portion (3) comprising a notch (5) separating two teeth (6a, 6b) having ends oriented in the direction of the end of the barrel (1) opposite the head (2),
the insert being **characterized in that** the projecting portion (3) comprises a crossover (7) connecting said teeth (6a, 6b) together, the ends oriented in the direction of the end of the barrel (1) opposite the head (2) being free from the crossover, and the crossover (7) being proximal to the head (2) with the interposition of a free space (8) between the crossover (7) and the head (2).

2. Insert according to claim 1, **characterized in that** the crossover (7) comprises, between both teeth (6a, 6b), a face (12) inclined towards the barrel (1) in the direction of the barrel end opposite to the head (2).

3. Insert according to claim 2, **characterized in that** the angle, formed by the inclined face (12) relative to the external surface of the barrel (1) between the crossover (7) and the head (2), is comprised between 25 degrees and 35 degrees.

4. Insert according to any one of the preceding claims, **characterized in that** the end of the barrel (1) opposite the head (2) comprises a chamfer (14) locally reducing the external dimensions of said barrel (1).

5. Insert according to any one of the preceding claims, **characterized in that** the free ends of the teeth (6a, 6b) are provided each with a side (15a, 15b) inclined towards the barrel (1) in the direction of the end of the barrel (1) opposite the head (2).

6. Insert according to claims 4 and 5, **characterized in that** the inclined sides (15a, 15b) of both teeth (7a, 7b) are formed in prolongation of the chamfer (14).

7. Insert according to any one of the claims 4 or 6 **characterized in that** the chamfer (14) forms an angle comprised between 25 degrees and 35 degrees relative to the axis of the barrel (1).

8. Insert according to any one of the preceding claims, **characterized in that** each tooth (6a, 6b) comprises two longitudinal side walls (16a, 16b) converging towards one another in a opposite direction from the barrel (1).

9. Insert according to any one of the preceding claims, **characterized in that** it comprises a plurality of projecting portions (3), said projecting portions (3) being angularly distributed on the external surface of the barrel (1), two adjacent projecting portions (3) being separated by a slot (17).
